# EUROPEAN PATENT APPLICATION

(11) **EP 4 835 325 A1**
(43) Date of publication of application: **04.11.2026**
(21) Application number: 24912696.2
(22) Date of filing: 23.12.2024
(51) Int. Cl.: F16H 37/06, B25J 9/06, B25J 17/00, B60K 17/34, F16H 15/50

(54) **MASTER MACHINE**

(30) Priority: 25.12.2023 JP 2023218635
(71) Applicant: Sumitomo Heavy Industries, Ltd., Tokyo 141-6025 (JP)
(72) Inventor: NIIKURA, Atsuhiko, Yokosuka-shi, Kanagawa 237-8555 (JP); NAGUMO, Toshiya, Yokosuka-shi, Kanagawa 237-8555 (JP)
(74) Representative: Louis Pöhlau Lohrentz
(86) International application number: PCT/JP2024/045357
(87) International publication number: WO 2025/142809

(57) **Abstract**

A master machine 100 includes a prime mover 11, a first transmission 21A that changes a speed of rotation of the prime mover 11, and a second transmission 21B that changes the speed of rotation of the prime mover 11 in parallel with the first transmission 21A. In the master machine 100, the first transmission 21A and the second transmission 21B are continuously variable transmissions each including a gear ratio of 0 and having a variable gear ratio. The master machine 100 may include a first arm 91 that is driven by output rotation of the first transmission 21A, a second arm 92 that is connected to a distal end side of the first arm 91 and that is driven by output rotation of the second transmission 21B, and a rotation transmission mechanism 36 that is disposed between the prime mover 11 and the second transmission 21B.

## Description

### Technical Field

The present disclosure relates to a master machine.

### Background Art

A robot including a plurality of drive sources and a speed reducer is known. For example, PTL 1 discloses an articulated robot including a plurality of joint portions. The robot disclosed in PTL 1 includes a base unit, an arm unit, three joint portions, and an end effector. Each of the three joint portions includes a speed reducer and a servo motor as a drive source. Each arm unit of the robot is driven to swing by rotation of each servo motor of each joint portion.

### Citation List

### Patent Literature

[PTL 1] Japanese Unexamined Patent Application Publication No. 2023-113542

### Summary of Invention

### Technical Problem

In the articulated robot disclosed in PTL 1, a prime mover such as a motor and a speed reducer are provided in each of a plurality of joint portions. The speed reducer has a fixed gear ratio, and an output rotating speed and a rotation direction are controlled by the prime mover. In such an articulated robot, there is a problem in that the number of prime movers increases according to the number of joint portions, and a consumption amount of raw materials (copper, rare metals, or the like in a case of a motor) related to the prime movers increases according to the number of prime movers.

The present disclosure has been made in view of such a problem, and one of the objects of the present disclosure is to provide a master machine capable of reducing the number of prime movers used and reducing the consumption amount of raw materials.

### Solution to Problem

In order to solve the above problem, a master machine according to an aspect of the present disclosure includes a prime mover, a first transmission that changes a speed of rotation of the prime mover, and a second transmission that changes the speed of rotation of the prime mover in parallel with the first transmission. The first transmission and the second transmission are continuously variable transmissions each including a gear ratio of 0 and having a variable gear ratio.

Any combinations of the above components, and substitutions in which components and expressions of the present disclosure are interchangeably replaced among methods, systems, and the like, are also effective as aspects of the present disclosure.

### Advantageous Effects of Invention

According to the present disclosure, it is possible to provide a master machine capable of reducing the number of prime movers used and reducing a consumption amount of raw materials.

### Brief Description of Drawings

FIG. 1 is a side view showing a master machine of a first embodiment.
FIG. 2 is a schematic view schematically showing a configuration of the master machine of FIG. 1.
FIG. 3 is a schematic view schematically showing a configuration of an articulated robot of a comparative example.
FIG. 4 is a longitudinal sectional view showing a configuration of a speed-change unit of the master machine of FIG. 2.
FIG. 5 is a schematic view schematically showing a modification example of the master machine of FIG. 1.
FIG. 6 is a side view showing a master machine of a second embodiment.
FIG. 7 is a schematic view schematically showing a configuration of the master machine of FIG. 6.
FIG. 8 is a schematic view schematically showing a configuration of a self-propelled cart of the comparative example.
FIG. 9 is a schematic view schematically showing a first modification example of the master machine of FIG. 6.
FIG. 10 is a schematic view schematically showing a second modification example of the master machine of FIG. 6.

### Description of Embodiments

Hereinafter, the present disclosure will be described with reference to the drawings based on preferred embodiments. In the embodiments and modification examples, the same or equivalent components and members will be represented by the same reference numerals and duplicate descriptions will be appropriately omitted. In addition, dimensions of the members in each drawing are shown enlarged or reduced as appropriate for easy understanding. Moreover, in each drawing, some of the members not important for the description of the embodiment are not shown. In addition, when the same or equivalent components are described to be distinguished from each other, the description will be made with capital letters such as A, B, and C added to the ends of the reference numerals.

In addition, terms including ordinal numbers such as "first" and "second" are used to describe various components, but such terms are used only for the purpose of distinguishing one component from another, and do not limit the components.

### [First Embodiment]

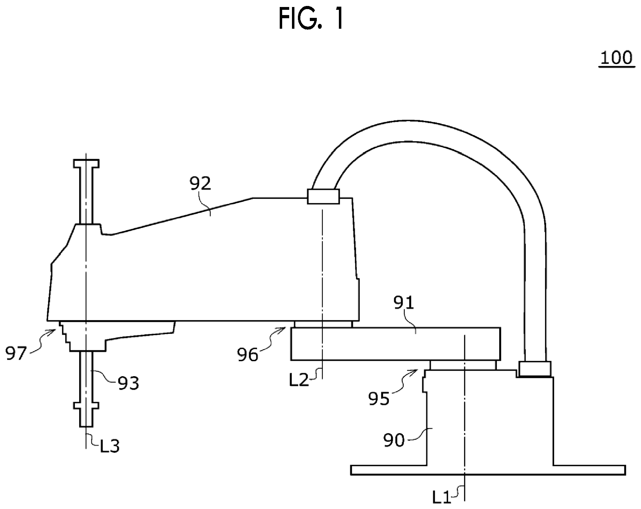

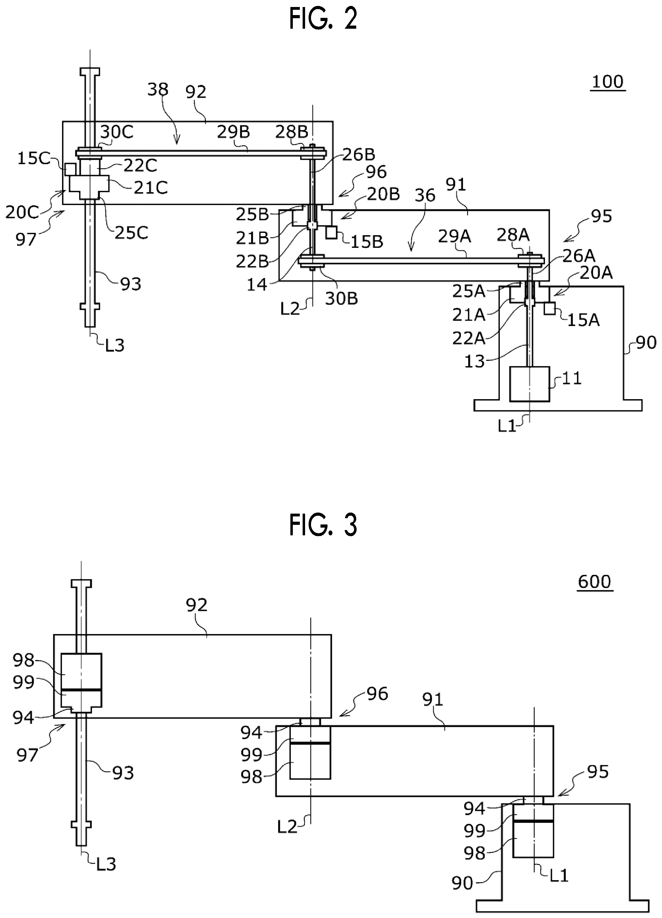

A master machine 100 according to a first embodiment of the present disclosure will be described with reference to FIGS. 1 to 5. FIG. 1 is a side view of the master machine 100. FIG. 2 is a schematic view schematically showing a configuration of the master machine 100. FIG. 3 is a schematic view showing a configuration of an articulated robot 600 of a comparative example. The master machine 100 of the present embodiment is an articulated robot, and is particularly an articulated SCARA robot in which an arm moves in a horizontal direction.

The master machine 100 of the present embodiment includes a fixed link 90, a first arm 91 connected to a distal end side of the fixed link 90 via a first joint portion 95, a second arm 92 connected to a distal end side of the first arm 91 via a second joint portion 96, and a vertical unit 93 connected to a distal end side of the second arm 92 via a third joint portion 97. The distal end side of the first arm 91 swings horizontally around a rotational axis L1 relative to the fixed link 90, and a distal end side of the second arm 92 swings horizontally around a rotational axis L2 relative to the distal end side of the first arm 91. The vertical unit 93 is a circular rod-shaped portion that moves up and down along a rotational axis L3 with respect to the second arm 92, and an end effector (not shown) having various functions is attached to a distal end portion of the vertical unit 93.

First, the articulated robot 600 of the comparative example will be described with reference to FIG. 3. The articulated robot 600 is created for comparison in a development process of the master machine 100. As shown in FIG. 3, the articulated robot 600 is different from the master machine 100 in that a set of a motor 98 and a speed reducer 99 is provided in each of the first joint portion 95, the second joint portion 96, and the third joint portion 97, and other configurations are the same. That is, the articulated robot 600 includes three sets of the motor 98 and the speed reducer 99. Each speed reducer 99 is configured to move a subsequent arm and the like by reducing rotation input from each motor 98 and outputting the reduced rotation from an output shaft 94.

A motor shaft (not shown) of the motor 98 of the third joint portion 97 and the output shaft 94 of the speed reducer 99 are hollow shafts through which the vertical unit 93 passes vertically in a non-contact manner. The vertical unit 93 is configured to move up and down by transmitting rotation from the output shaft 94 of the speed reducer 99.

In the articulated robot 600, the speed reducer 99 has a fixed gear ratio, and an output rotating speed and a rotation direction are controlled by the motor 98. Since the articulated robot 600 uses the motor 98 as many as the number of the joint portions, the number of the motors 98 also increases according to the number of the joint portions, and a consumption amount of raw materials of the motor, such as copper and rare metals, increases.

The master machine 100 of the present embodiment will be described based on the description of the comparative example. The present inventor has conceived of a configuration in which a plurality of joint portions are driven by a single prime mover in order to reduce the consumption amount of raw materials. However, it has been found that, in a case where a speed reducer having a fixed gear ratio is used, an output rotating speed and a rotation direction of the speed reducer are fixed by a rotation speed and a rotation direction of the single prime mover, and thus it is difficult to independently control the plurality of joint portions. Therefore, the present inventor has conceived of a configuration in which a speed-change unit 20 including a transmission 21 having a variable gear ratio is provided in the joint portions 95, 96, and 97 in order to independently control the plurality of joint portions.

As shown in FIG. 2, in the master machine 100, a speed-change unit 20A is provided in the first joint portion 95, a speed-change unit 20B is provided in the second joint portion 96, and a speed-change unit 20C is provided in the third joint portion 97. In the master machine 100, the speed-change unit 20A, the speed-change unit 20B, and the speed-change unit 20C change a speed of rotation input from a single prime mover 11 provided in the fixed link 90 and drive each joint portion. In the master machine 100, since each joint portion does not include the dedicated prime mover 11, the number of the prime movers 11 is reduced, and the consumption amount of the raw materials of the prime mover 11 can be suppressed.

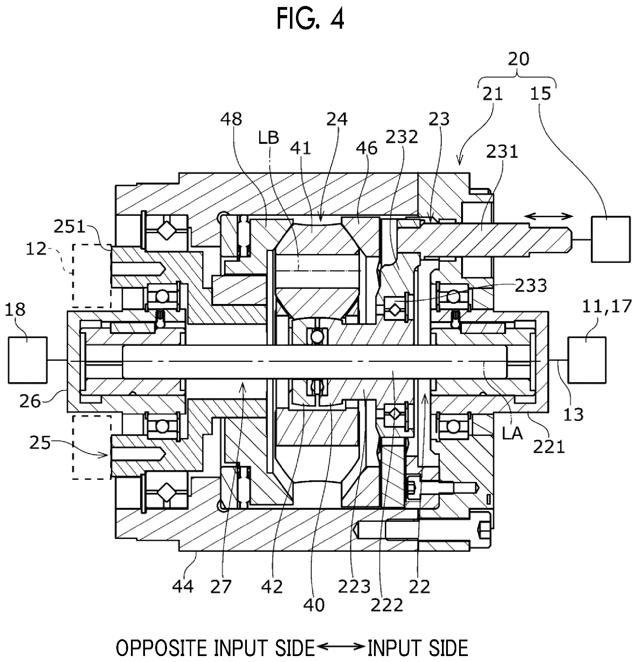

The speed-change unit 20 will be described with reference to FIG. 4. FIG. 4 is a longitudinal sectional view showing a configuration of the speed-change unit 20. For convenience of description, in FIG. 4, a right side in the axial direction is referred to as an input side, and a side opposite to the input side is referred to as an opposite input side. The speed-change unit 20 includes a transmission 21 and a speed-change actuator 15. The transmission 21 includes an input shaft 22, a speed-change mechanism 24, a gear ratio changing mechanism 23, and a direct transmission mechanism 27. The rotation to be subjected to speed change is input to the input shaft 22 from an upstream device 17. The upstream device 17 is the prime mover 11 or the direct transmission mechanism 27 in the upstream stage. That is, the input shaft 22 has a configuration in which the rotation from the prime mover 11 is directly input, and a configuration in which the rotation from the prime mover 11 is input through the direct transmission mechanism 27 in the upstream stage. Hereinafter, an example in which the upstream device 17 is the prime mover 11 will be described, but the description is also applied to a case where the upstream device 17 is the direct transmission mechanism 27. The speed-change unit 20 changes the speed of rotation input from the prime mover 11 and outputs the changed rotation to the driven device 12.

Hereinafter, rotation of the prime mover 11 refers to the rotation of an object rotating in the prime mover 11, and in this example, refers to the rotation of a prime mover shaft 13. In addition, the rotation of the driven device 12 refers to the rotation of an object rotating in the driven device 12.

The speed-change mechanism 24 changes a speed of rotation input to the input shaft 22 and then transmits the changed rotation to an output shaft 25. The gear ratio changing mechanism 23 changes the gear ratio of the speed-change mechanism 24. The direct transmission mechanism 27 transmits the rotation input to the input shaft 22 on the input side to a transmission shaft 26 on the opposite input side without speed change, that is, without changing the speed thereof. In other words, the direct transmission mechanism 27 of the present embodiment transmits the rotation input to the input shaft 22 to the transmission shaft 26 by bypassing the speed-change mechanism 24. The rotation transmitted to the transmission shaft 26 is input to an input shaft of the transmission in a downstream stage.

The speed-change actuator 15 can change the gear ratio of the transmission 21 by inputting power to the transmission 21 based on control information of a control device (not shown). The speed-change actuator 15 of the present embodiment is a linear actuator, and inputs power along the axial direction of the transmission 21 to the transmission 21. The specific type of the speed-change actuator 15 is not particularly limited as long as the speed-change actuator 15 can change the gear ratio of the transmission 21, and the speed-change actuator 15 may be a rotary actuator or the like.

The prime mover 11 can rotate the prime mover shaft 13 by the torque generated inside the prime mover 11, and then output the rotation from the prime mover shaft 13 to the transmission 21. The prime mover 11 of the present embodiment is an electric motor that rotates the prime mover shaft 13 by using electric energy. The motor can rotate the prime mover shaft 13 by the torque generated by cooperation of a stator and a rotor.

A specific configuration of the transmission 21 of the present embodiment will be described. The transmission 21 can change, by the speed-change actuator 15, an actual gear ratio, which is a gear ratio actually achieved, in a stepless (continuous) manner by using the gear ratio changing mechanism 23. The gear ratio here means a ratio of the output rotating speed, which is the rotation speed of the output shaft 25, to the input rotation speed, which is the rotation speed of the input shaft 22 (= output rotating speed/input rotation speed). The transmission 21 of the embodiment is an infinitely variable transmission (IVT) and is configured such that the variable range of the actual gear ratio includes zero (= 1/∞). Here, an example of such a transmission 21 will be described, but the specific example is not particularly limited.

The input shaft 22 includes an input member 221 to which rotation is input from the prime mover 11, a shaft 222 connected to the input member 221, and a sleeve 223 fixed to the shaft 222. The specific structure of the input shaft 22 is not particularly limited as long as the rotation can be transmitted from the prime mover 11 to the speed-change mechanism 24. The input shaft 22 here is an example configured by a plurality of members, but may be configured by a single member, and the number of members is not particularly limited.

The speed-change mechanism 24 includes an input race 40 that is provided to be integrally rotatable with the input shaft 22, a first support race 42 that is rotatably supported by the input shaft 22, a second support race 46 that is provided to be movable in the axial direction in a casing 44 of the transmission 21, an output race 48 that is provided to be integrally rotatable with the output shaft 25, and a plurality of planetary rolling elements 41 that roll on the races 40, 42, 46, and 48. The plurality of planetary rolling elements 41 are pressed against the output race 48 by a pressing force applied from the second support race 46 by a pressing-force imparting mechanism (not shown).

When the input race 40 rotates, the planetary rolling element 41 revolves around the rotational axis LA, which is the revolution axis of the input shaft 22, while rotating around a spin axis LB. When the planetary rolling element 41 revolves, the output race 48 rotates around the rotational axis LA following the planetary rolling element 41. In this case, ideally, the output race 48 rotates at the output rotating speed obtained by multiplying the input rotation speed of the input shaft 22 by the gear ratio. The gear ratio is determined according to an inclination angle of the spin axis LB with respect to the rotational axis LA, and is changed by the gear ratio changing mechanism 23.

The output shaft 25 includes the output race 48 and an output member 251 that is connected to the output race 48 to be integrally rotated with the output race 48 and outputs the rotation to the driven device 12. The specific structure of the output shaft 25 is not particularly limited as long as the rotation can be transmitted from the speed-change mechanism 24 to the driven device 12. The output shaft 25 here is an example configured by a plurality of members, but may be configured by a single member, and the number of members is not particularly limited.

The gear ratio changing mechanism 23 of the present embodiment can change the gear ratio by changing the posture of the input race 40. The gear ratio changing mechanism 23 includes a shaft 231 that is movable in the axial direction by the power output from the speed-change actuator 15 and a ring member 232 that is integrally movable in the axial direction with the shaft 231. The ring member 232 rotatably supports the input shaft 22 via a bearing 233, and is movable in the axial direction integrally with the input shaft 22 by a retaining ring or the like. The specific example of the gear ratio changing mechanism 23 is not particularly limited, and various similar mechanisms adopted in the transmission 21 may be adopted.

When the power in the axial direction is input to the shaft 231 from the speed-change actuator 15, the input shaft 22 including the input race 40 and the first support race 42 is integrally moved in the axial direction together with the ring member 232. By movement of the input race 40 and the first support race 42 in an axial direction relative to the second support race 46 and the output race 48, an inclination angle of the spin axis LB of the planetary rolling element 41 relative to the rotational axis LA is changed, and the gear ratio is changed to a gear ratio corresponding to the inclination angle. The gear ratio is zero (= 1/∞) when the spin axis LB is parallel to the rotational axis LA, and the gear ratio is continuously increased as the inclination angle of the spin axis LB relative to the rotational axis LA is increased. That is, the actual gear ratio can be changed in a stepless (continuous) manner, and the variable range is configured to include zero.

The present applicant has disclosed an example of an infinitely variable transmission in Japanese Unexamined Patent Application Publication No. 2021-181812, Japanese Unexamined Patent Application Publication No. 2022-135086, and the like, and the technology of the continuously variable transmission is understood by those skilled in the art.

The direct transmission mechanism 27 includes an input member 221 to which the rotation is input from the prime mover 11, a shaft 222 connected to the input member 221, and a transmission shaft 26 connected to the shaft 222. That is, the input member 221 and the shaft 222 are shared with the speed-change mechanism 24. The transmission shaft 26 of this example has a configuration symmetrical to the input member 221. The transmission shaft 26 is connected to the input portion of a downstream device 18. The direct transmission mechanism 27 outputs the rotation input to the input member 221 from the transmission shaft 26 via the shaft 222, and rotates the input portion of the downstream device 18 connected to the transmission shaft 26. For example, the downstream device 18 is the speed-change unit 20 at the downstream stage.

The description returns to FIG. 2. The master machine 100 includes the prime mover 11, a first transmission 21A that changes a speed of rotation of the prime mover 11, a second transmission 21B that changes the speed of rotation of the prime mover 11 in parallel with the first transmission 21A, and a third transmission 21C that changes the speed of rotation of the prime mover 11 in parallel with the first transmission 21A. The fact that the plurality of transmissions change the speed of rotation of the prime mover in parallel means that the rotation of the prime mover is input to the plurality of transmissions in parallel. The fact that rotation of the prime mover is input to the plurality of transmissions in parallel means not that one transmission among the plurality of transmissions receives rotation of the prime mover changed by another transmission, but that rotation of the prime mover is input to one transmission regardless of the gear ratio of another transmission. The first transmission 21A, the second transmission 21B, and the third transmission 21C are continuously variable transmissions each including a gear ratio of 0 and having a variable gear ratio.

As an example, the master machine 100 includes a first arm 91 driven by the output rotation of the first transmission 21A, a second arm 92 driven by the output rotation of the second transmission 21B, and a vertical unit 93 driven by the output rotation of the third transmission 21B.

The description will be made in detail. The prime mover shaft 13 of the prime mover 11 is connected to an input shaft 22A of the transmission 21A of the speed-change unit 20A of the first joint portion 95, and the rotation of the prime mover 11 is input to the input shaft 22A of the transmission 21A. In the first joint portion 95, the transmission 21A outputs the changed rotation from an output shaft 25A to the first arm 91, which is the driven device, to swing the first arm 91. The operation of the first arm 91 can be controlled by changing the gear ratio of the transmission 21A by the speed-change actuator 15A.

The rotation of the prime mover 11 input to the input shaft 22A is transmitted to a pulley 28A fixed to a transmission shaft 26A via the direct transmission mechanism of the transmission 21A. The rotation of the pulley 28A is transmitted to an intermediate shaft 14 through an annular transmission body 29A and a pulley 30B. The pulley 28A, the annular transmission body 29A, and the pulley 30B are disposed between the prime mover 11 and the second transmission 21B, and constitute a rotation transmission mechanism 36 that transmits the rotation of the prime mover 11 to the second transmission 21B. The pulley 28A is a rotating member on the input side of the rotation transmission mechanism 36 and is located on the rotational axis L1 of the first arm 91. The pulley 30B is a rotating member on the output side of the rotation transmission mechanism 36 and is located on the rotational axis L2 of the second arm 92. As shown in FIG. 2, the rotation transmission mechanism 36 is disposed in the first arm 91 having a hollow structure. Accordingly, since the rotation transmission mechanism 36 is hardly exposed as compared with a case where the rotation transmission mechanism 36 is disposed outside the first arm 91, the possibility that foreign matter adheres to the rotation transmission mechanism 36 to cause an operation defect can be reduced. A specific example of the rotation transmission mechanism 36 is not particularly limited, and may be, for example, a gear mechanism, a combination of a chain and a sprocket, or the like.

Hereinafter, a loop-shaped endless belt that transmits rotation between a plurality of pulleys will be simply referred to as a "belt", a loop-shaped endless wire that transmits rotation between a plurality of pulleys will be simply referred to as a "wire", and the belt and the wire are included in the annular transmission body.

The intermediate shaft 14 is connected to an input shaft 22B of the transmission 21B of the speed-change unit 20B of the second joint portion 96, and the rotation of the intermediate shaft 14 is input to the input shaft 22B of the transmission 21B. In the second joint portion 96, the transmission 21B outputs the change rotation from an output shaft 25B to the second arm 92, which is the driven device, to swing the second arm 92. The operation of the second arm 92 can be controlled by changing the gear ratio of the transmission 21B by the speed-change actuator 15B.

The rotation of the intermediate shaft 14 input to the input shaft 22B is transmitted to a pulley 28B fixed to a transmission shaft 26B via the direct transmission mechanism of the transmission 21B. The rotation of the pulley 28B is transmitted to an input shaft 22C of the transmission 21C through an annular transmission body 29B and a pulley 30C. The pulley 28B, the annular transmission body 29B, and the pulley 30C are disposed between the prime mover 11 and the third transmission 21C, and constitute a rotation transmission mechanism 38 that transmits the rotation of the prime mover 11 to the third transmission 21C. The pulley 28B is a rotating member on the input side of the rotation transmission mechanism 38, and is located on the rotational axis L2 of the second arm 92. The pulley 30C is a rotating member on the output side of the rotation transmission mechanism 38, and is located on the rotational axis L3 of the vertical unit 93. As shown in FIG. 3, the rotation transmission mechanism 38 is disposed in the second arm 92 having a hollow structure. Accordingly, since the rotation transmission mechanism 38 is hardly exposed as compared with a case where the rotation transmission mechanism 38 is disposed outside the second arm 92, the possibility that foreign matter adheres to the rotation transmission mechanism 38 to cause an operation defect can be reduced. A specific example of the rotation transmission mechanism 38 is not particularly limited, and may be, for example, a gear mechanism, a combination of a chain and a sprocket, or the like.

In the third joint portion 97, the input shaft 22C rotates to output the speed change rotation from an output shaft 25C of the transmission 21C to the vertical unit 93, which is the driven device. The input shaft 22C and the output shaft 25C are hollow shafts through which the vertical unit 93 passes vertically in a non-contact manner. The vertical unit 93 is configured to move upward and downward by the rotation being transmitted from the output shaft 25C of the transmission 21C. The operation of the vertical unit 93 can be controlled by changing the gear ratio of the transmission 21C by the speed-change actuator 15C.

The master machine 100 configured as described above controls the first arm 91, the second arm 92, and the vertical unit 93 independently of each other by the rotation of the single prime mover 11, and realizes a desired operation.

In the description of FIG. 4, an example is shown in which the direct transmission mechanisms of the plurality of transmissions 21 are connected in a cascade, and the rotation of the prime mover 11 is transmitted in a stepwise manner via the direct transmission mechanism of the transmission 21, but the present disclosure is not limited thereto. For example, the rotation of the prime mover 11 may be transmitted by using an independent transmission mechanism without using the direct transmission mechanism. In addition, in the description of FIG. 4, an example is shown in which the plurality of transmissions 21 are disposed in a distributed manner in each arm, but the present disclosure is not limited thereto. For example, the plurality of transmissions 21 may be disposed in a concentrated manner in a predetermined space. Hereinafter, a master machine 200 obtained by applying these modifications to the master machine 100 will be described.

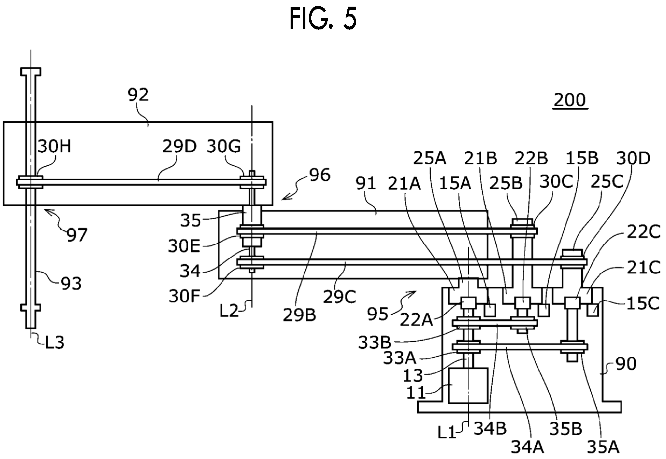

The master machine 200 according to a modification example of the master machine 100 will be described with reference to FIG. 5. FIG. 5 is a schematic view schematically showing the master machine 200 according to the modification example. The configuration example of FIG. 5 is different from the configuration example of FIG. 4 in that the plurality of transmissions 21A, 21B, and 21C are disposed in a concentrated manner in the fixed link 90, and the rotation of the output shafts 25B and 25C of the transmissions 21B and 21C is transmitted by using an annular transmission body. Hereinafter, the overlapping description will be omitted, and the differences will be mainly described.

In the master machine 200, the rotation of the prime mover 11 is transmitted to the input shaft 22A of the transmission 21A through the prime mover shaft 13. In addition, the rotation of the prime mover 11 is transmitted to the input shaft 22B of the transmission 21B through the prime mover shaft 13, a pulley 33B, an annular transmission body 34B, and a pulley 35B. In addition, the rotation of the prime mover 11 is transmitted to the input shaft 22C of the transmission 21C through the prime mover shaft 13, a pulley 33A, an annular transmission body 34A, and a pulley 35A. The annular transmission bodies 34A and 34B may be wires, but are belts in this example.

The transmission 21A changes the speed of rotation transmitted to the input shaft 22A and outputs the changed rotation to the output shaft 25A. Accordingly, the output shaft 25A rotates about the rotational axis L1, and the first arm 91 swings. The operation of the first arm 91 can be controlled by changing the gear ratio of the transmission 21A by the speed-change actuator 15A.

The transmission 21B changes the speed of rotation transmitted to the input shaft 22B and outputs the changed rotation to the output shaft 25B. The rotation of the output shaft 25B is transmitted to a shaft member 35 to which a pulley 30E is fixed through the pulley 30C fixed to the output shaft 25B, the annular transmission body 29B, and the pulley 30E. Accordingly, the shaft member 35 rotates about the rotational axis L2, and the second arm 92 swings. The operation of the second arm 92 can be controlled by changing the gear ratio of the transmission 21B by the speed-change actuator 15B. The shaft member 35 is a hollow shaft, and an intermediate shaft 34 penetrates the inside of the shaft member 35 in a non-contact manner.

The transmission 21C changes the speed of rotation transmitted to the input shaft 22C and outputs the changed rotation to the output shaft 25C. The rotation of the output shaft 25C is transmitted to the intermediate shaft 34 to which a pulley 30F is fixed through a pulley 30D fixed to the output shaft 25C, an annular transmission body 29C, and a pulley 30F. The rotation of the intermediate shaft 34 is transmitted to the vertical unit 93 through the pulley 30G fixed to the intermediate shaft 34, the annular transmission body 29D, and the pulley 30H. Accordingly, the vertical unit 93 is configured to rotate about the rotational axis L3 and to move up and down. The operation of the vertical unit 93 can be controlled by changing the gear ratio of the transmission 21C by the speed-change actuator 15C.

In the master machine 200, in this example, the annular transmission bodies 29B, 29C, and 29D are wires, but may be belts. In the case of the articulated joint portion, the two rotational axes involved in the rotation transmission may not be parallel, and in this case, it has been found that the wire has a better ability to follow movement of the two rotational axes.

The master machine 200 of the modification example configured as described above controls the first arm 91, the second arm 92, and the vertical unit 93 independently of each other by the rotation of the single prime mover 11, and realizes a desired operation.

### [Second Embodiment]

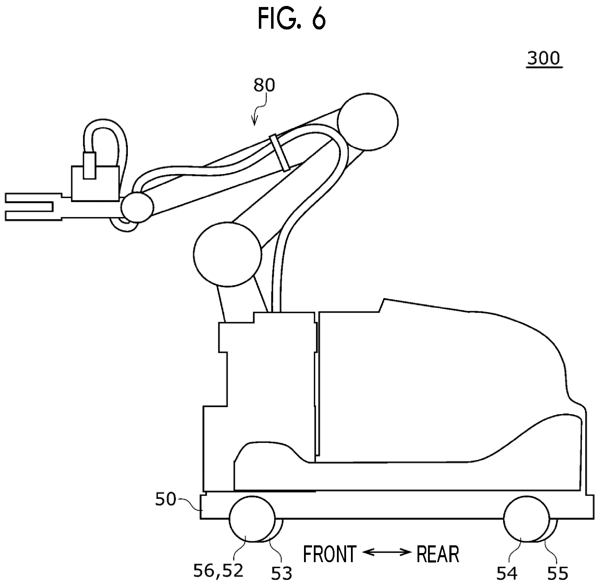

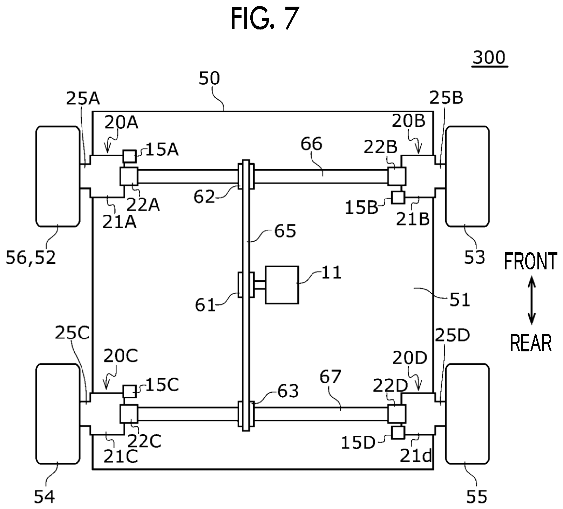

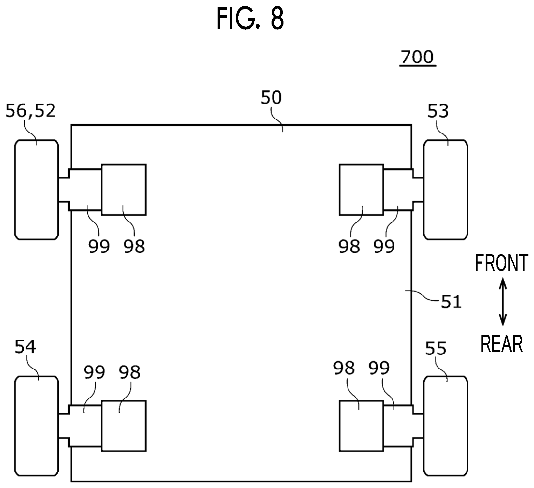

A master machine 300 according to a second embodiment of the present disclosure will be described with reference to FIGS. 6 to 8. FIG. 6 is a side view showing the master machine 300 of the second embodiment. FIG. 7 is a schematic view schematically showing a configuration of the master machine 300. FIG. 8 is a schematic view schematically showing a configuration of a self-propelled cart 700 of a comparative example. In the following description, components denoted by the same reference numerals as those in the first embodiment are the same or equivalent components as those in the first embodiment, and the description in the first embodiment applies unless otherwise specified.

As shown in FIG. 6, the master machine 300 of the present embodiment is a transport cart having a vehicle body 50 and a plurality of wheels 52, 53, 54, and 55. The plurality of wheels 52, 53, 54, and 55 are collectively referred to as wheels 56. In this example, the wheels 52 and 53 are front wheels, and the wheels 54 and 55 are rear wheels. The master machine 300 of this example is provided with an articulated robot 80. As a result, the master machine 300 can travel to any position and perform work using the articulated robot 80.

In the present embodiment, the wheels 56 for traveling are provided on an output side of the first transmission 21A, an output side of the second transmission 21B, an output side of the third transmission 21C, and an output side of the fourth transmission 21D, respectively. As the wheels 56, various known types of wheels can be used. As an example, as the wheels 56, a Mecanum wheel, an omni wheel, or the like can be adopted in addition to a tire.

First, a self-propelled cart 700 of the comparative example will be described with reference to FIG. 8. The self-propelled cart 700 is created for comparison in the development process of the master machine 300. As shown in FIG. 8, the self-propelled cart 700 is different from the master machine 300 in that a set of a motor 98 and a speed reducer 99 is provided corresponding to each of the wheels 52 and 53, which are two front wheels, and the wheels 54 and 55, which are two rear wheels, and other configurations are the same. That is, the self-propelled cart 700 is provided with four sets of the motor 98 and the speed reducer 99. Each speed reducer 99 is configured to reduce rotation input from each motor 98, output the reduced rotation, and rotationally drive the wheels 56.

In the self-propelled cart 700, the speed reducer 99 has a fixed gear ratio, and an output rotating speed and a rotation direction are controlled by the motor 98. The self-propelled cart 700 can perform forward movement, backward movement, turning, and stopping by controlling the rotation of each motor 98. Since the self-propelled cart 700 uses the motors 98 in the same number as the wheels 56, the number of the motors 98 also increases according to the number of the wheels 56, and the consumption amount of raw materials of the motors, such as copper and rare metals, increases.

The master machine 300 of the present embodiment will be described based on the description of the comparative example. In order to reduce the consumption amount of raw materials, the present inventor has conceived of a configuration in which a plurality of wheels 56 are driven by a single prime mover 11. However, it has been found that, in a case where a speed reducer having a fixed gear ratio is used, the output rotating speed and the rotation direction of the speed reducer are fixed by the rotation speed and the rotation direction of the single prime mover, and thus it is difficult to independently control the plurality of wheels 56. Therefore, in order to independently control the plurality of wheels 56, the present inventor has conceived of a configuration in which a speed-change unit 20 including a transmission 21 having a variable gear ratio for each of the plurality of wheels 56 is provided. The description of the transmission 21 in the first embodiment can be applied to the transmission 21.

As shown in FIG. 7, in the master machine 300, the speed-change unit 20A is provided in the wheel 52, the speed-change unit 20B is provided in the wheel 53, the speed-change unit 20C is provided in the wheel 54, and the speed-change unit 20D is provided in the wheel 55. In the master machine 300, the speed-change units 20A, 20B, 20C, and 20D change the speed of rotation input in parallel from the single prime mover 11 provided in the base portion 51 of the vehicle body 50 to drive the respective wheels 56. In the master machine 300, since each wheel 56 does not include the dedicated prime mover 11, the number of the prime movers 11 is reduced, and the consumption amount of the raw materials of the prime movers 11 can be suppressed.

The disposition of the prime mover 11 is not limited, but the prime mover 11 of this example is disposed at a center in a width direction between the front wheels and the rear wheels in a front-rear direction. A pulley 61 is fixed to an output shaft of the prime mover 11, and the pulley 61 is rotated by the rotation of the prime mover 11. The rotation of the pulley 61 is configured to be transmitted to the pulleys 62 and 63 via an annular transmission body 65. The pulleys 62 and 63 are fixed to axles 66 and 67, respectively, and the axles 66 and 67 are rotated integrally with the pulleys 62 and 63.

One end of the axle 66 is connected to the input shaft 22A of the transmission 21A of the speed-change unit 20A, and the other end of the axle 66 is connected to the input shaft 22B of the transmission 21B of the speed-change unit 20B. One end of the axle 67 is connected to the input shaft 22C of the transmission 21C of the speed-change unit 20C, and the other end of the axle 67 is connected to the input shaft 22D of the transmission 21D of the speed-change unit 20D.

The output shaft 25A of the transmission 21A is connected to the wheel 52, and the output shaft 25B of the transmission 21B is connected to the wheel 53. The output shaft 25C of the transmission 21C is connected to the wheel 54, and the output shaft 25D of the transmission 21D is connected to the wheel 55.

The rotation speed and the direction of the wheel 52 can be controlled by changing the gear ratio of the transmission 21A by the speed-change actuator 15A. The rotation speed and the direction of the wheel 53 can be controlled by changing the gear ratio of the transmission 21B by the speed-change actuator 15B. The rotation speed and the direction of the wheel 54 can be controlled by changing the gear ratio of the transmission 21C by the speed-change actuator 15C. The rotation speed and the direction of the wheel 55 can be controlled by changing the gear ratio of the transmission 21D by the speed-change actuator 15D. In this way, the master machine 300 can perform forward movement, backward movement, turning, and stopping by independently controlling the rotation speed and the direction of each wheel 56.

The master machine 300 configured as described above controls the wheels 52, 53, 54, and 55 independently of each other by the rotation of the single prime mover 11, and realizes the desired traveling operation.

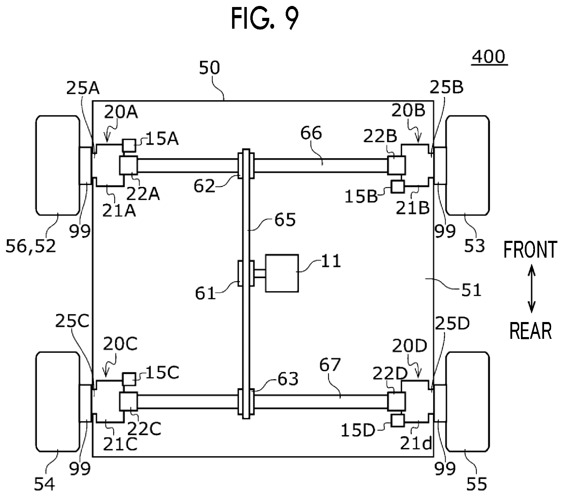

A master machine 400 according to a first modification example of the master machine 300 will be described with reference to FIG. 9. FIG. 9 is a schematic view schematically showing the master machine 400 according to the first modification example. In the description of the master machine 300, an example in which the master machine has the transmission and does not have the speed reducer has been shown, but the present disclosure is not limited thereto. The master machine may have a configuration in which the transmission and the speed reducer are used in combination. The master machine 400 in FIG. 9 is different from the master machine 300 in that a speed reducer 99 is provided between the output shaft 25 of the transmission 21 and the wheel 56. Hereinafter, the overlapping description will be omitted, and the differences will be mainly described.

In the master machine 400, speed reducers 99 are provided downstream of each of the transmissions 21A, 21B, 21C, and 21D. Specifically, the master machine 400 includes the speed reducers 99 that reduce the rotation of the output shafts 25A, 25B, 25C, and 25D of the transmissions 21A, 21B, 21C, and 21D at a fixed reduction ratio and transmits the reduced rotation to the wheels 52, 53, 54, and 55, in addition to the transmissions 21A, 21B, 21C, and 21D. According to the master machine 400, the range of the total gear ratio can be flexibly expanded by using the transmission 21 and the speed reducer 99 in combination.

The master machine 400 according to the first modification example configured as described above controls the wheels 52, 53, 54, and 55 independently of each other by the rotation of the single prime mover 11, and realizes the desired traveling operation.

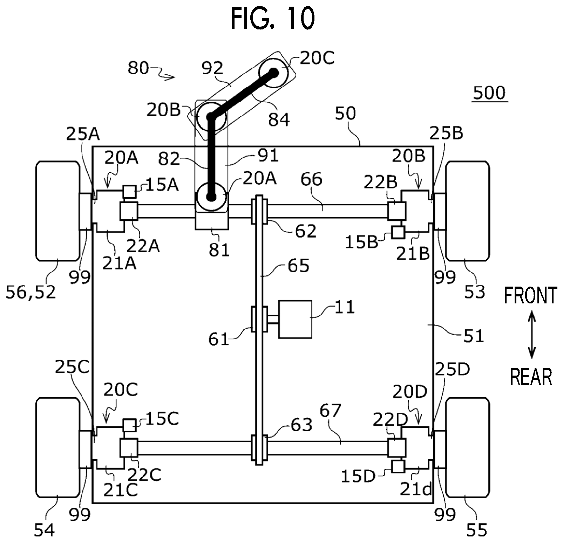

A master machine 500 according to a second modification example of the master machine 300 will be described with reference to FIG. 10. FIG. 10 is a schematic view schematically showing the master machine 500 according to the second modification example. In the description of the master machine 300, an example in which the master machine drives the wheels and does not drive other elements has been shown, but the present disclosure is not limited thereto. The master machine may have a configuration in which a plurality of drive elements of different types are driven by the rotation of the single prime mover. The master machine 500 in FIG. 10 is different from the master machine 300 in that the wheels 56 are driven and the articulated robot 80 is driven by the rotation of the single prime mover 11. Hereinafter, the overlapping description will be omitted, and the differences will be mainly described. The master machine 500 is provided with the speed reducer 99 between the output shaft 25 of the transmission 21 and the wheels 56, similarly to the master machine 400.

The articulated robot 80 includes an orthogonal-shaft speed reducer 81, a first speed-change unit 20A, a second speed-change unit 20B, and a third speed-change unit 20C. In FIG. 10, the description of the speed-change actuator of the speed-change unit is omitted. The first speed-change unit 20A swings the first arm 91 by the rotation of the prime mover 11. The second speed-change unit 20B swings the second arm 92 by the rotation of the prime mover 11. The third speed-change unit 20C moves the end effector (not shown) by the rotation of the prime mover 11.

The rotation of the prime mover 11 is transmitted to the first speed-change unit 20A from the axle 66 via the orthogonal-shaft speed reducer 81. In addition, the rotation of the prime mover 11 is transmitted to the second speed-change unit 20B by the transmission mechanism 82. In addition, the rotation of the prime mover 11 is transmitted to the third speed-change unit 20C by the transmission mechanism 82 and the transmission mechanism 84. As an example, the transmission mechanisms 82 and 84 transmit rotation by an annular transmission body and a pulley. For the transmission mechanisms 82 and 84 in the master machine 500, the configurations of the master machines 100 and 200 can be applied.

The master machine 500 of the second modification example configured as described above controls the wheels 52, 53, 54, and 55 independently of each other by the rotation of the single prime mover 11 to realize a desired traveling operation, and controls the first arm 91 and the second arm 92 independently of each other by the rotation of the prime mover 11 to realize a desired operation.

The features of the master machines 100, 200, 300, 400, and 500 configured as described above will be described. The master machines 100, 200, 300, 400, and 500 include the prime mover 11, the first transmission 21A that changes the speed of rotation of the prime mover 11, and the second transmission 21B that changes the speed of rotation of the prime mover 11 in parallel with the first transmission 21A. The first transmission 21A and the second transmission 21B are continuously variable transmissions each including a gear ratio of 0 and having a variable gear ratio.

According to this configuration, it is possible to reduce the number of the prime movers 11 used and to reduce the consumption amount of the raw material related to the prime mover 11. In addition, since the joint portion does not include the prime mover, this is advantageous for weight saving of the joint portion, and thus is also advantageous for weight saving of the master machines 100, 200, 300, 400, and 500. It should be noted that the master machine may include other speed reducers in a part thereof.

The embodiments and the modification examples have been described above. These embodiments are merely examples, and it is understood by those skilled in the art that various modifications and changes can be made, and such modifications and changes are also included in the scope of the present disclosure. Therefore, the descriptions and the drawings in the present specification should be treated as illustrative, rather than limiting.

Hereinafter, other modification examples will be described. In the descriptions and the drawings here, the same or equivalent components and members as those in the embodiments are denoted by the same reference numerals. Descriptions overlapping with the above descriptions will be appropriately omitted, and configurations different from the above descriptions will be described with emphasis.

In the above description, an example in which the prime mover 11 is an electric motor has been described, but the present disclosure is not limited thereto. The specific example of the prime mover 11 is not particularly limited, and may be, for example, an engine that rotates the prime mover shaft 13 by using thermal energy, a water wheel that rotates the prime mover shaft by using the kinetic energy of water, a wind turbine that rotates the prime mover shaft by using the kinetic energy of air, or the like.

In the above description, an example in which the present disclosure is applied to an articulated SCARA robot or a traveling device has been described, but the present disclosure is not limited thereto. The present disclosure can be applied to a master machine based on a known principle and having a plurality of drive sections.

In the above description, an example in which the rotation of the prime mover 11 is transmitted by the annular transmission body and the pulley has been described, but the present disclosure is not limited thereto. The mechanism for transmitting the rotation of the prime mover 11 to the speed-change unit 20 may include, for example, a transmission mechanism based on various known principles such as a gear, a cog belt, and a joint such as a universal joint.

In the above description, an example in which the prime mover 11 is disposed on the fixed link 90 has been described, but the present disclosure is not limited thereto. The prime mover may be disposed at a place other than the fixed link, such as inside the arm.

Each of these modification examples exhibits the same operation and effect as those of the embodiment.

Any combination of the above embodiments and modification examples is also useful as an embodiment of the present disclosure. A new embodiment resulting from such a combination has the combined effects of the respective embodiments and modification examples that are combined.

### Industrial Applicability

The present disclosure relates to a master machine.

### Reference Signs List

- 11: prime mover
- 15: speed-change actuator
- 20: speed-change unit
- 21: transmission
- 36: rotation transmission mechanism
- 56: wheel
- 90: fixed link
- 91: first arm
- 92: second arm
- 100, 200, 300, 400, 500:: master machine

## Claims

1. A master machine comprising:
a prime mover;
a first transmission that changes a speed of rotation of the prime mover; and
a second transmission that changes the speed of rotation of the prime mover in parallel with the first transmission,
wherein the first transmission and the second transmission are continuously variable transmissions each including a gear ratio of 0 and having a variable gear ratio.

2. The master machine according to claim 1, further comprising:
a first arm that is driven by output rotation of the first transmission;
a second arm that is connected to a distal end side of the first arm and that is driven by output rotation of the second transmission; and
a rotation transmission mechanism that is disposed between the prime mover and the second transmission.

3. The master machine according to claim 2, wherein a rotating member on an input side of the rotation transmission mechanism is located on a rotational axis of the first arm.

4. The master machine according to claim 2 or 3,
wherein the rotation transmission mechanism is disposed in the first arm.

5. The master machine according to any one of claims 1 to 4, further comprising:
a first arm that moves relative to a fixed link; and
a second arm that moves relative to the first arm,
wherein the prime mover is disposed at the fixed link.

6. The master machine according to claim 1, wherein wheels for traveling are provided on an output side of the first transmission and on an output side of the second transmission, respectively.

7. The master machine according to claim 6, wherein a speed reducer is provided downstream of each of the first transmission and the second transmission.
